# EUROPÄISCHE PATENTSCHRIFT

(11) **EP 3 448 705 B1**
(45) Veröffentlichungstag und Bekanntmachung des Hinweises auf die Patenterteilung: **05.08.2020**
(21) Anmeldenummer: 17724745.9
(22) Anmeldetag: 25.04.2017
(51) Int. Cl.: B60K 6/40, B60K 17/02, F16D 25/0638

(54) **HYBRIDMODUL UND ANTRIEBSANORDNUNG FÜR EIN KRAFTFAHRZEUG**
HYBRID MODULE AND DRIVE ASSEMBLY FOR A MOTOR VEHICLE
MODULE HYBRIDE ET SYSTÈME DE PROPULSION POUR UN VÉHICULE AUTOMOBILE

(30) Priorität: 27.04.2016 DE 102016207104
(43) Veröffentlichungstag der Anmeldung: 06.03.2019
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2017/100336
(87) Internationale Veröffentlichungsnummer: WO 2017/186226

(56) Entgegenhaltungen:
- EP-A2- 1 800 929
- DE-A1-102015 215 875
- FR-A1- 2 814 121
- FR-A1- 2 830 590
- US-A1- 2011 240 384

## Beschreibung

Die Erfindung betrifft ein Hybridmodul für ein Kraftfahrzeug, wie einen Pkw, einen Lkw oder ein anderes Nutzfahrzeug, zum Ankoppeln an eine Verbrennungskraftmaschine, gemäß dem Oberbegriff des Anspruchs 1 sowie eine Antriebsanordnung für ein Kraftfahrzeug mit dem erfindungsgemäßen Hybridmodul.

Zurzeit erhältliche Hybridmodule, die durch Ankopplung eines Verbrennungsmotors an einen Antriebsstrang eines Fahrzeugs einen Elektromotorbetrieb mit einem Verbrennungsmotorbetrieb kombinieren können, bestehen meist aus einem Elektromotor, einer Trennkupplung, deren Betätigungssystem, Lager und Gehäusekomponenten, die die drei Hauptkomponenten zu einer funktionstüchtigen Einheit verbinden. Der Elektromotor ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Um das Drehmoment eines Hybridmoduls, welches zwischen Verbrennungsmotor und Getriebe anzuordnen ist, unabhängig von der Erzeugung mittels Elektromotor und/oder Verbrennungsmotor an das Getriebe weiterzuleiten, ist ein zusätzliches Aggregat erforderlich, mit dem die Drehmomentübertragung gesteuert werden kann. Daher werden bei mit derartigen Hybridmodulen ausgestatteten sogenannten Hybridfahrzeugen ein Drehmomentwandler, eine Kupplung, ein stufenloses (CVT-) Getriebe und/oder eine Doppelkupplung (nass oder trocken) zwischen dem Hybridmodul und dem Getriebe angeordnet.

Wenn ein Hybridmodul mit einer Doppelkupplung derart kombiniert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden.

Ein derart positioniertes Hybridmodul wird auch als P2- Hybridmodul bezeichnet. Eine solche Anordnung führt jedoch sehr häufig zu erheblichen Bauraumproblemen. Zurzeit geht deswegen die Entwicklung dahin, das sogenannte P2-Hybridmodul und die Doppelkupplung nicht mehr als zwei separate Aggregate auszuführen und nebeneinander anzuordnen, sondern ein Hybridmodul mit integrierter Doppelkupplung zu entwickeln. Dies ermöglicht es, alle erforderlichen Komponenten noch kompakter und funktionaler anzuordnen.

Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung direkt nebeneinander anzuordnen. Ein weiteres vorteilhaftes Bauprinzip besteht darin, Kupplungen ganz oder teilweise radial innerhalb des Elektromotors anzuordnen.

Doppelkupplungen haben sich auch in Kombination mit einem Hybridantrieb bewährt. Solche Art von Kupplungen sollen aber weiterentwickelt werden. Auf Grund des massenhaften Einsatzes besteht aber auch die Forderung der kostengünstigen Fertigung sowie der optimalen Bauraum-Nutzung.

Aus der DE 10 2010 003 442 A1 ist ein Hybridmodul gemäß dem Oberbegriff des Anspruchs 1 bekannt.

Bezüglich weiteren Standes der Technik wird auf die FR 2 814 121 A1, die FR 2 830 590 A1 und die EP 1 800 929 A1 verwiesen.

Hiervon ausgehend liegt der vorliegenden Erfindung die Aufgabe zugrunde, ein Hybridmodul sowie ein mit dem Hybridmodul ausgestattete Antriebsanordnung für ein Kraftfahrzeug zur Verfügung zu stellen, die eine zuverlässige Funktionalität mit geringen Herstellungskosten sowie mit geringem Bauvolumen vereinen.

Diese Aufgabe wird durch das erfindungsgemäße Hybridmodul nach Anspruch 1 sowie durch die erfindungsgemäße Antriebsanordnung nach Anspruch 10 gelöst.

Vorteilhafte Ausgestaltungen des Hybridmoduls sind in den Unteransprüchen 2 bis 9 angegeben.

Es ist anzumerken, dass im weiteren Verlauf der Ausdruck "auf der Seite ... angeordnet" oder ähnlich derart aufzufassen sind, dass damit gemeint ist, das ein Anordnen näher zu der Seite als zu einer anderen Seite liegend erfolgt, die der Seite gegenüber liegt.

Das erfindungsgemäße Hybridmodul ist für ein Kraftfahrzeug zum Ankoppeln einer Verbrennungskraftmaschine ausgestaltet und umfasst eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist, und mit der das Hybridmodul von der Verbrennungskraftmaschine trennbar ist, einen Elektromotor zur Erzeugung eines Antriebsdrehmoments mit einem hohlzylinderförmigen Rotor, eine Doppelkupplungsvorrichtung, mit der Drehmoment vom Elektromotor und/ oder von der Trennkupplung auf einen Antriebsstrang übertragbar ist. Die Doppelkupplungsvorrichtung ist mit einer ersten Teilkupplung und einer zweiten Teilkupplung ausgestattet. Im Sinne der vorliegenden Erfindung sind dabei die Bezeichnungen erste Teilkupplung und zweite Teilkupplung nicht auf bestimmte Gänge eines angeschlossenen Getriebes bezogen. Weiterhin umfasst das Hybridmodul ein Trennkupplungsbetätigungssystem zur Betätigung der Trennkupplung, ein erstes Betätigungssystem zur Betätigung der ersten Teilkupplung und ein zweites Betätigungssystem zur Betätigung der zweiten Teilkupplung. Die Anschlusseinrichtung, die Trennkupplung und die erste Teilkupplung und/oder die zweite Teilkupplung sind entlang einer Anordnungsrichtung im Wesentlichen hintereinander angeordnet. Die Trennkupplung ist zumindest abschnittsweise innerhalb des vom Rotor umschlossenen Raumes angeordnet. Entlang der Anordnungsrichtung sind das Trennkupplungsbetätigungssystem sowie das erste Betätigungssystem auf der Seite des Elektromotors angeordnet, die der Anschlusseinrichtung zugewandt ist, d.h. das Trennkupplungsbetätigungssystem sowie das erste Betätigungssystem sind näher zu der Seite des Elektromotors als zu einer Seite angeordnet, die der Seite des Elektromotors gegenüber liegt.

Die Anschlusseinrichtung kann z. B. als Keilwellenverzahnung ausgebildet sein, auf die ein komplementär ausgestaltetes Antriebselement eines anzukoppelnden Verbrennungsmotors ein Drehmoment übertragen kann.

Es ist somit erfindungsgemäß vorgesehen, dass wenigstens die Trennkupplung in dem Raum innerhalb des Elektromotors angeordnet ist, der durch den hohlzylinderförmig ausgestalteten Rotor des Elektromotos umschlossen ist. Das heißt, dass die Trennkupplung in dem Längenabschnitt entlang der Anordnungsrichtung angeordnet ist, den der ringförmige Rotor auf dessen Rotationsachse abdeckt.

Aufgrund dieser Anordnung in dem vom Rotor umschlossenen Raum ist somit die Trennkupplung radial innerhalb des Elektromotors angeordnet. Dabei ist nicht auszuschließen, dass wenigstens die Trennkupplung nur abschnittsweise innerhalb dieses Raumes angeordnet ist.

Vorzugsweise sind die Trennkupplung, der Elektromotor und die Doppelkupplungsvorrichtung in Drehmomentübertragungsrichtung genau hintereinander und/oder ineinander angeordnet, insbesondere auf einer gemeinsamen ideellen Achse und damit alle koaxial in Bezug zueinander angeordnet. Die Anordnungsrichtung verläuft dabei bevorzugt entlang der Rotationsachse der Kupplungen, so dass die Anschlusseinrichtung, die Trennkupplung, die erste Teilkupplung und die zweite Teilkupplung entlang der Anordnungsrichtung auf der Rotationsachse koaxial angeordnet sind.

Dabei soll nicht ausgeschlossen sein, dass sich ein jeweiliges Betätigungssystem ebenfalls axial in dem vom Rotor des Elektromotors umschlossenen Bereich erstreckt. In alternativer Ausgestaltung ist ein Betätigungssystem außerhalb des vom Elektromotor umschlossenen Raumes angeordnet.

Insbesondere kann das erfindungsgemäße Hybridmodul derart ausgestaltet sein, dass sich die erste Teilkupplung und die zweite Teilkupplung zumindest abschnittsweise in dem vom Rotor des Elektromotors begrenzten Raum befinden.

Bei der Doppelkupplungsvorrichtung kann es sich um eine "MDD"-Kupplung handeln, wie sie z.B. in der DE 10 2015 207 470 A1 offenbart ist. Sie kann dabei alternativ hebelbetätigt sein, wie es die PCT/DE 2015/200242 lehrt, und mehrere oder nur eine Reibscheibe pro Kupplung aufweisen. Doppelkupplungen mit mehreren Scheiben pro Teilkupplung weisen den Vorteil auf, dass sie radial kleiner aufbauen und so eher radial innerhalb des Rotors verschachtelt werden können.

Die Erfindung bezieht sich somit auf ein Hybridmodul, in welchem die Doppelkupplung derart ausgeführt und angeordnet ist, dass alle drei Kupplungen nebeneinander angeordnet sind und mindestens die Trennkupplung innerhalb des Elektromotors angeordnet ist. Dadurch lässt sich ein Modul zur Verfügung zu stellen, welches durch die optimale Bauraumausnutzung insgesamt ein sehr geringes Volumen aufweist. Aufgrund dieses sehr geringen Volumens ist das erfindungsgemäße Modul in einfacher und flexibler Weise in bestehende Antriebsstränge integrierbar, so dass wenig Aufwand erforderlich ist, um bestehende, ursprünglich ausschließlich für den Verbrennungsmotorbetrieb ausgelegte Antriebsstränge auf einen Hybrid-Betrieb umzurüsten.

In einer Ausgestaltung des Hybridmoduls ist auf der dem Getriebe zugewandten Seite des Elektromotors das zweite Betätigungssystem zur Betätigung der zweiten Teilkupplung angeordnet. Diese Ausgestaltung ermöglicht in einfacher und zuverlässiger Weise die Betätigung der beiden äußeren Kupplungen durch jeweilige Betätigungssysteme, die in einem sehr geringen räumlichen Abstand zu den jeweiligen Kupplungen angeordnet sind.

Allerdings ist die vorliegende Erfindung nicht darauf eingeschränkt, dass das zweite Betätigungssystem auf der der Anschlusseinrichtung abgewandten Seite angeordnet ist, sondern auch das zweite Betätigungssystem kann wie das Trennkupplungsbetätigungssystem und das erste Betätigungssystem auf der Seite des Elektromotors angeordnet sein, die der Anschlusseinrichtung zugewandt ist. Auch dieses zweite Betätigungssystem kann dabei abschnittsweise innerhalb des Elektromotors oder auch daneben angeordnet sein.

Weiterhin kann das Hybridmodul dadurch ausgestaltet sein, dass die zweite Teilkupplung eine größere radiale Erstreckung aufweist als die erste Teilkupplung und auf der Seite des Elektromotors angeordnet ist, die der Anschlusseinrichtung abgewandt ist.

Bevorzugt ist dabei die zweite Teilkupplung axial außerhalb des Elektromotors bzw. seines Rotors angeordnet. Demzufolge sollte in dieser Ausgestaltung auch das zweite Betätigungssystem außerhalb des Elektromotors angeordnet sein. Diese Ausführung und Anordnung der zweiten Teilkupplung bietet sich an, da um die zweite Teilkupplung kein Betätigungselement einer der beiden anderen Kupplungen herumgeführt werden muss. Demzufolge kann diese zweite Teilkupplung mit relativ großen radialen Erstreckungen ausgeführt werden, so dass sie trotz Auslegung entsprechend eines bestimmtem, vom gesamten Hybridmodul zu übertragendem Drehmoment relativ schmal und demzufolge platzsparend neben dem Elektromotor angeordnet werden kann.

Zur Betätigung der jeweiligen Kupplung sollten die Betätigungssysteme für die Trennkupplung und für die erste Teilkupplung jeweils eine Kraftübertragungseinrichtung, insbesondere einen Druckzylinder, sowie ein Betätigungslager aufweisen, die zusammen jeweils eine Einheit bilden, und die als Einheiten radial und/oder axial versetzt zueinander angeordnet sind.

Der radiale und axiale Versatz bezieht sich dabei auf eine gemeinsame Rotationsachse. Insbesondere ist vorgesehen, dass die Kraftübertragungseinrichtung und das Betätigungslager der ersten Teilkupplung radial außen in Bezug zur Kraftübertragungseinrichtung und zum Betätigungslager der Trennkupplung angeordnet sind. Diese Ausgestaltung ist hinsichtlich des benötigten Bauraums noch vorteilhafter ausgeführt, wenn die Kraftübertragungseinrichtung und das Betätigungslager der Trennkupplung parallel zur Anordnungsrichtung nebeneinander angeordnet sind, und die Kraftübertragungseinrichtung und das Betätigungslager der ersten Teilkupplung radial versetzt zueinander angeordnet sind. Daraus ergibt sich ein sehr geringer Volumenbedarf bei Gewährleistung der Funktionalität der Kupplungen. Weiterhin werden dadurch relativ kleine Betätigungslagerdurchmesser ermöglicht, wodurch Lagerschleppmomente reduziert sind.

Zwecks Reduzierung der benötigten Bauteile sowie zur weiteren Volumenverringerung ist vorgesehen, dass die Doppelkupplungsvorrichtung eine Gegenplatte aufweist, die sowohl für die erste Teilkupplung als auch für die zweite Teilkupplung eine Gegenplattenfunktion erfüllt. Dabei dienen gegenüberliegende Seiten der Gegenplatte jeweils als Reibfläche für eine der Teilkupplungen.

Dabei kann die Gegenplatte mechanisch fest mit dem Rotor des Elektromotors verbunden sein und innerhalb des vom Stator des Elektromotors eingeschlossenen Raumes angeordnet sein, wobei an der Gegenplatte ein Befestigungsabschnitt angeordnet ist, der gekröpft ausgeführt ist, so dass er sich in radialer und axialer Richtung aus dem vom Stator des Elektromotors eingeschlossenen Raum heraus erstreckt. Das bedeutet, dass die Gegenplatte auf einem parallel zur Rotationsachse des Rotors verlaufenden Längenabschnitt angeordnet ist, der vom Stator überdeckt ist. Um diese Anordnung zu gewährleisten, ist der Befestigungsabschnitt der Gegenplatte über eine oder mehrere Kupplungsscheiben sowie gegebenenfalls angeordnete Zwischenplatten gekröpft ausgeführt. Dabei ist der Befestigungsabschnitt fest mit dem Rotor des Elektromotors verbunden, vorzugsweise indirekt über einen Rotorträger.

Weiterhin ist in vorteilhafter Ausgestaltung des Hybridmoduls vorgesehen, dass das erste Betätigungssystem wenigstens ein Überbrückungselement aufweist, welches sich zwecks Betätigung der ersten Teilkupplung an der radial äußeren Seite der Trennkupplung erstreckt.

Das heißt, dass ein Übergreifen der Trennkupplung mittels des Überbrückungselementes des ersten Betätigungssystems zur Betätigung der ersten Teilkupplung erfolgt. Dieses Betätigungselement oder sogenannte Verbindungselement kann je nach Kraftrichtung beispielsweise ein Drucktopf oder ein Zuganker sein. Die Betätigung der Trennkupplung erfolgt dabei vorzugsweise durch einen Rotorträger hindurch, der zur rotatorischen Lagerung des Rotors des Elektromotors ausgestaltet ist. Das Überbrückungselement des Betätigungssystems der ersten Teilkupplung verläuft über die Trennkupplung hinweg und durch den Rotorträger sowie durch die Gegenplatte der Trennkupplung hindurch. Die Betätigung der zweiten Teilkupplung kann aufgrund der der Trennkupplung gegenüberliegenden Anordnung direkt durch das zweite Betätigungssystem ohne Durchgriffe durch ein anderes Bauteil hindurch erfolgen.

Die Nutzung eines Überbrückungselements als mechanischer Verbindung zwischen einem verbrennungsmotorseitigen Betätigungssystem und der ersten Teilkupplung über die Trennkupplung hinweg hat den deutlichen Vorteil des geringen Bauraums gegenüber einer Betätigung der ersten Teilkupplung durch ein getriebeseitig angeordnetes Betätigungssystem.

Diese Überbrückung der Trennkupplung ist deshalb möglich, da die Trennkupplung im Vergleich zu den beiden Teilkupplungen der Doppelkupplung einen geringeren Durchmesser aufweisen kann, da von ihr lediglich das vom Verbrennungsmotor erzeugte Drehmoment zu übertragen ist, und nicht wie von der Doppelkupplung das Summendrehmoment von Verbrennungsmotor und Elektromotor übertragen werden muss.

Dabei ist die Anordnung des Überbrückungselementes als mechanischer Verbindung zwischen einem verbrennungsmotorseitigen Betätigungssystem und der ersten Teilkupplung nicht auf die Ausgestaltung der Erfindung mit der Anordnung aller drei Kupplungen innerhalb des Elektromotors eingeschränkt, sondern diese Ausführung ist auch dann vorteilhaft, wenn nicht alle drei Kupplungen innerhalb des Elektromotors angeordnet sind, sondern die zweite Teilkupplung getriebeseitig außerhalb des Elektromotors angeordnet ist. Diese zweite Teilkupplung kann dann mit relativ großem Kupplungsscheibendurchmesser ausgeführt werden, wodurch die zweite Teilkupplung axial schmaler baut und platzsparend neben dem Elektromotor anordnet werden kann.

Diese Ausgestaltung ist dann weiter optimiert, wenn die Trennkupplung eine Anpressplatte und/oder eine Zwischenplatte sowie eine Translationsführung aufweist, die zur translatorischen Bewegung der Anpressplatte bzw. der Zwischenplatte in Richtung auf eine Gegenplatte der Trennkupplung ausgestaltet ist, wobei das Betätigungssystem der ersten Teilkupplung mehrere Überbrückungselemente aufweist und die Translationsführung in Umfangsrichtung zwischen Überbrückungselementen angeordnet ist.

Gegebenenfalls kann eine solche Translationsführung ein integraler Bestandteil eines in Bezug zum Rotor des Elektromotors ortsfest angeordneten Bauteils sein. Da die Überbrückungselemente in Umfangsrichtung auf ihren jeweiligen Längen nicht miteinander verbunden werden können, da sie durch Öffnungen im Rotorträger und in der Gegenplatte der Trennkupplung hindurchragen müssen, kann die Translationsführung für die Trennkupplung zwischen diesen Überbrückungs- bzw. Verbindungselementen mit relativ zur Trennkupplung feststehenden Bauteilen, wie z. B. dem Rotorträger oder der Gegenplatte, verbunden werden oder als integraler Bestandteil dieser Bauteile ausgebildet sein.

Wenigstens eines der beiden Betätigungssysteme der Teilkupplungen und/oder der Trennkupplung kann zur Verstärkung der Anpresskraft einen Hebelmechanismus aufweisen.

Mit einem derartigen Hebelmechanismus lässt sich das von der jeweiligen Kupplung übertragbare Drehmoment steigern. Die dabei angewendeten Hebelelemente werden als Hebelfedern oder Tellerfedern ausgeführt. Insbesondere mit einer radial großen zweiten Teilkupplung ist diese Konstruktion vorteilhaft, da in dieser Kupplung nur relativ geringe Betätigungswege erforderlich sind, welche durch die Hebelfedern bzw. Tellerfedern realisiert werden können. Somit ist es möglich, für zumindest eine der Teilkupplungen auf ein erprobtes und wirtschaftliches Kupplungsdesign zurückzug reifen.

Zur Lösung der Aufgabe wird außerdem eine Antriebsanordnung für ein Kraftfahrzeug mit einer Verbrennungskraftmaschine und einem erfindungsgemäßen Hybridmodul sowie mit einem Getriebe zur Verfügung gestellt, wobei das Hybridmodul mit dem Verbrennungsmotor und dem Getriebe mechanisch über Kupplungen verbunden ist.

Die vorliegende Erfindung wird im Folgenden anhand der in den beiliegenden Zeichnungen dargestellten Ausführungsbeispiele erläutert.

### Es zeigen

Figur 1: Ein erfindungsgemäßes Hybridmodul einer ersten Ausführungsform mit einem gekröpften Befestigungsabschnitt an der Gegenplatte der Doppelkupplungsvorrichtung,
Figur 2: ein erfindungsgemäßes Hybridmodul einer zweiten Ausführungsform mit Anordnung aller Kupplungen im vom Rotor umschlossenen Raum,
Figur 3: ein erfindungsgemäßes Hybridmodul einer dritten Ausführungsform mit Ausführung der ersten Teilkupplung als Mehrscheibenkupplung und einer radial großen zweiten Teilkupplung,
Figur 4: ein erfindungsgemäßes Hybridmodul einer vierten Ausführungsform mit Ausführung der Trennkupplung als Mehrscheibenkupplung sowie radial groß ausgeführter, hebelbetätigter zweiter Teilkupplung,
Figur 5: ein erfindungsgemäßes Hybridmodul einer fünften Ausführungsform, bei der die Betätigungssysteme alle Kupplungen auf der der Anschlusseinrichtung zugewandten Seite des Elektromotors angeordnet sind,
Figur 6: ein erfindungsgemäßes Hybridmodul einer sechsten Ausführungsform, bei der die Trennkupplung als hebelbetätigte Kupplung ausgeführt ist und die erste Teilkupplung mit einem Zugmittel betätigt wird.

Die Erfindung wird durch die rein schematischen Zeichnungen in keiner Weise beschränkt, wobei anzumerken ist, dass die in den Zeichnungen dargestellten Ausführungsbeispiele nicht auf die dargestellten Größenverhältnisse eingeschränkt sein sollen.

Die Figuren sind lediglich schematischer Natur und dienen nur dem Verständnis der Erfindung. Gleiche Elemente sind mit denselben Bezugszeichen versehen. Elemente der einzelnen Ausführungsbeispiele können auch in den anderen Ausführungsbeispielen eingesetzt werden, sie sind also untereinander austauschbar.

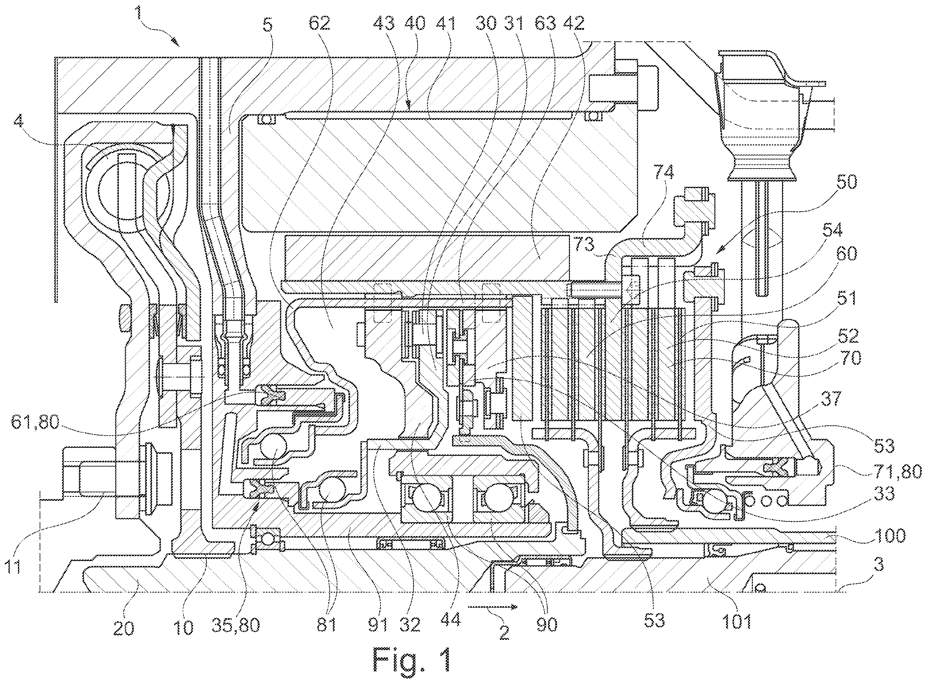

Figur 1 zeigt in einem ersten Ausführungsbeispiel ein Hybridmodul 1, welches entlang einer hier waagerecht dargestellten Anordnungsrichtung 2, die der Ausrichtung der gemeinsamen Rotationsachse 3 entspricht, eine Anschlusseinrichtung 10 aufweist, die z. B. als Keilwellenverzahnung ausgebildet sein kann, und die an einer Zwischenwelle 20 ausgeführt ist. Weiterhin umfasst das Hybridmodul 1 entlang der Anordnungsrichtung 2 eine Trennkupplung 30, einen Elektromotor 40 sowie eine Doppelkupplungsvorrichtung 50, die eine erste Teilkupplung 60 sowie eine zweite Teilkupplung 70 aufweist. Die erste Teilkupplung 60 ist drehmomentübertragend mit einer inneren Getriebeeingangswelle 101 verbunden und die zweite Teilkupplung 70 ist drehmomentübertragend mit einer äußeren Getriebeeingangswelle 100 verbunden.

Der Elektromotor 40 ist als Elektromaschine einsetzbar oder auch als Generator im Rekuperationsbetrieb. Der Rotor 42 des Elektromotors 40 kann einen Permanentmagneten aufweisen.

Die Trennkupplung 30 kann entgegen der hier dargestellten Ausführungsform auch als Mehrscheibenkupplung ausgeführt sein.

Ein von einem hier nicht dargestellten Verbrennungsmotor erzeugtes Drehmoment kann über die Kurbelwelle des Verbrennungsmotors 11 sowie das daran gekoppelte Zwei-Massen-Schwungrad 4 über die Anschlusseinrichtung 10 in die Zwischenwelle 20 eingetragen werden. Von der Zwischenwelle 20 kann das Drehmoment über die Trennkupplung 30 auf die Doppelkupplungsvorrichtung 50 übertragen werden, die je nach Betätigung einer der beiden Teilkupplungen 60, 70 das Drehmoment auf die innere Getriebeeingangswelle 101 oder die äußere Getriebeeingangswelle 100 leitet. Ein vom Elektromotor 40 realisiertes Drehmoment kann ebenfalls von der Doppelkupplungsvorrichtung 50 auf die Getriebeeingangswellen 100, 101 übertragen werden. Je nach Betätigung der Trennkupplung 30 kann somit entweder das vom Verbrennungsmotor zur Verfügung gestellte Drehmoment in Richtung eines angekoppelten Getriebes geleitet werden und/oder das vom Elektromotor 40 zur Verfügung gestellte Drehmoment in Richtung des Getriebes geleitet werden.

Wenn nur der Elektromotor 40 das antreibende Drehmoment realisiert, ist die Trennkupplung 30 geöffnet, so dass der Verbrennungsmotor abgekuppelt ist und gegebenenfalls abgeschaltet werden kann. Bei geschlossener Trennkupplung 30 kann bei gleichzeitigem Betrieb eines angeschlossenen Verbrennungsmotors sowie des Elektromotors 40 der Elektromotor 40 im Generatormodus mitlaufen oder aber auch durch Addition der zur Verfügung gestellten Drehmoment einen sogenannten "Boost-Betrieb" realisieren.

Der Elektromotor 40 ist in der hier dargestellten Ausführungsform statorseitig an einer Stützwand 5 befestigt. Innerhalb des Stators 41 des Elektromotors 40 befindet sich ein hohlzylinderförmiger Rotor 42, der auf einem Rotorträger 44 montiert rotierbar gelagert ist. Der Rotor 42 umschließt dabei einen Raum 43, in dem erfindungsgemäß wenigstens eine der Kupplungen Trennkupplung, erste Teilkupplung und zweite Teilkupplung zumindest abschnittsweise angeordnet sind. Es ist ersichtlich, dass dadurch eine sehr kompakte und volumensparende Bauweise des Hybridmoduls 1 realisiert werden kann. In der in Figur 1 dargestellten Ausführungsform ist die Trennkupplung 30 sowie die erste Teilkupplung 60 bereichsweise in dem vom Rotor 42 umschlossenen Raum 43 angeordnet. Die zweite Teilkupplung 70 ist außerhalb des vom Rotor 42 umschlossenen Raumes 43 angeordnet.

Der Trennkupplung 30 ist ein Trennkupplungsbetätigungssystem 35 zugeordnet, welches eine Kraftübertragungseinrichtung 80 in Form eines Druckzylinders sowie ein Druckstück 32 der Anpressplatte 31 aufweist. Durch Betätigung des Trennkupplungsbetätigungssystems 35 wird über das Druckstück 32 die Anpressplatte 31 auf eine Kupplungsscheibe 33 gedrückt, die sich wiederum an der Gegenplatte 37 abstützt. Die Kupplungsscheibe 33 ist rotationsfest mit der Zwischenwelle 20 verbunden. Ein von einem an die Anschlusseinrichtung 10 angeschlossenen, hier nicht dargestellten Verbrennungsmotor erzeugtes Drehmoment kann somit von der Zwischenwelle 20 und der Kupplungsscheibe 33 auf die Anpressplatte 31 sowie die Gegenplatte 37 übertragen werden, so dass der Rotorträger 44 in Rotation versetzt wird. Das derart eingetragene Drehmoment wird über den Rotorträger 44 der Gegenplatte 54 der Doppelkupplungsvorrichtung 50 zur Verfügung gestellt, so dass durch Zusammenpressung der Reibscheiben 51 sowie der Zwischenplatten 52 mittels einer der Anpressplatten 53 der Doppelkupplungsvorrichtung 50 das Drehmoment über die erste Teilkupplung 60 oder die zweite Teilkupplung 70 auf die innere Getriebeeingangswelle 101 oder die äußere Getriebeeingangswelle 100 geleitet wird.

In der in Figur 1 dargestellten Ausführungsform ist sowohl die erste Teilkupplung 60 als auch die zweite Teilkupplung 70 als Mehrscheibenkupplung ausgeführt. Das Betätigungssystem 61 für die erste Teilkupplung 60 befindet sich auf derselben Seite des Elektromotors 40 wie das Trennkupplungsbetätigungssystem 35, nämlich auf der Seite, die der Anschlusseinrichtung 10 zugewandt ist. Dabei sind in der hier dargestellten Ausführungsform das Trennkupplungsbetätigungssystem 35 sowie auch das erste Betätigungssystem 61 zumindest abschnittsweise in dem vom Rotor umschlossenen Raum 43 positioniert, um diesen Raum optimal auszunutzen. Das erste Betätigungssystem 61 umfasst wie auch das Trennkupplungsbetätigungssystem 35 eine Kraftübertragungseinrichtung 80 in Form eines Druckzylinders sowie ein Betätigungslager 81.

Dabei ist die vorliegende Erfindung nicht auf eine pneumatische oder hydraulische wirkende Kraftübertragungseinrichtung 80 eingeschränkt, sondern es kann alternativ die Kraftübertragung auf eine jeweilige Kupplung auch rein mechanisch oder elektromechanisch erfolgen.

Weiterhin weist das Hybridmodul einen sogenannten Drucktopf 62 auf, der mindestens ein Überbrückungselement 63 umfasst. Der Drucktopf 62 ist dabei derart angeordnet, dass er mittels der Kraftübertragungseinrichtung 80 des ersten Betätigungssystems 61 in Richtung auf die erste Teilkupplung 60 schiebbar ist. Das Überbrückungselement 63 des Drucktopfes 62 erstreckt sich dabei an der radial äußeren Seite der Trennkupplung 30 und somit zwischen der Trennkupplung 30 und dem Rotor 42 des Elektromotors 40. Ersichtlich ist, dass sich das Überbrückungselement 63, von dem vorzugsweise mehrere am Umfang des Drucktopfes 62 verteilt angeordnet sind, durch den Rotorträger 44 sowie die Gegenplatte 37 der Trennkupplung 30 hindurch erstrecken.

Diese Überbrückungselemente 63 können beispielsweise steg- oder bolzenähnlich ausgeführt sein und einen integralen Bestandteil des Drucktopfes 62 ausbilden oder auch Teil der Anpressplatte 53 sein. Alternativ können diese Überbrückungselemente 63 aber auch zusammen ein separates Bauteil ausbilden oder einzelne Elemente sein.

Das zweite Betätigungssystem 71 zur Betätigung der zweiten Teilkupplung 70 ist in der in Figur 1 dargestellten Ausführungsform auf der der Anschlusseinrichtung 10 gegenüberliegenden Seite des Elektromotors 40 angeordnet. Auch dieses zweite Betätigungssystem umfasst eine Kraftübertragungseinrichtung 80, die als Druckzylinder ausgeführt ist, sowie ein Betätigungslager 81. In der hier dargestellten Ausführungsform erstreckt sich die Gegenplatte 54 der Doppelkupplungsvorrichtung 50, die hier die Gegenplattenfunktion für die erste Teilkupplung 60 sowie auch für die zweite Teilkupplung 70 erfüllt, in den vom Stator 41 umgebenden Raum innerhalb des Elektromotors 40. An der Gegenplatte 54 ist ein Befestigungsabschnitt 73 ausgeführt, der eine Kröpfung 74 aufweist, die diesen Befestigungsabschnitt 73 aus dem vom Stator 41 umschlossenen Raum herausführt, um sicher einer mechanischen Befestigung zu dienen.

Die Kröpfung 74 des Befestigungsabschnittes 73 ist als Lamellenträger ausgeführt und stützt die lamellenähnlich gestalteten Zwischenplatten 52 in Radial- und in Umfangsrichtung ab.

Der Rotorträger 44 sowie die Trennkupplung 30 und die Doppelkupplung 50 sind auf einer gemeinsamen Lagerstelle 90 gelagert, die durch mehrere Wälzlager ausgeführt ist, die sich auf einem gemeinsamen Lagerträger 91 abstützen.

Im in Figur 1 dargestellten Ausführungsbeispiel sind alle drei Kupplungen 30, 60, 70 als direktbetätigte zugedrückte Kupplungen ausgeführt. Die zur Betätigung der Kupplungen 30, 60, 70 angeordneten Kraftübertragungseinrichtungen 80 sind zumindest im Fall der Trennkupplung 30 sowie der ersten Teilkupplung 60 konzentrisch angeordnete Arbeits- bzw. Druckzylinder, sogenannte Doppel-CSC (concentric slave cylinder), deren Gehäuse mit der Stützwand 5, die zwischen dem Zwei-Massen-Schwungrad 4 und dem Elektromotor 40 angeordnet ist, verbunden sind.

Die Betätigung der Trennkupplung 30 erfolgt durch die radial innere der beiden Kraftübertragungseinrichtungen 80. Die Betätigung der ersten Teilkupplung 60 erfolgt durch die radial nach außen versetzte Kraftübertragungseinrichtung 80, die für die erste Teilkupplung 60 als Teil des ersten Betätigungssystems 61 angeordnet ist.

Aus Figur 1 ist ersichtlich, dass das Trennkupplungsbetätigungssystem 35 sowie das erste Betätigungssystem 61 sehr platzsparend angeordnet sind, indem die Kraftübertragungseinrichtung 80 für das Trennkupplungsbetätigungssystem 35 axial neben dem dazugehörigen Betätigungslager 81 angeordnet ist, und die Betätigungseinrichtung 80 für das erste Betätigungssystem 61 radial über dem dazugehörigen Betätigungslager 81 angeordnet ist. Dadurch lässt sich in optimaler Weise der vom Rotor 42 umschlossene Raum 43 ausnutzen, bei gleichzeitiger Erfüllung der Anforderungen an die Betätigungsweglängen der beiden Kupplungen 30, 60. Zudem können die Durchmesser der Betätigungslager 81, des Trennkupplungsbetätigungssystems 35 sowie des ersten Betätigungssystems 61 relativ klein ausgeführt werden, wodurch sich die Lagerschleppmomente reduzieren lassen.

Die erste Teilkupplung 60 sowie die zweite Teilkupplung 70 der Doppelkupplungsvorrichtung 50 sind als Mehrscheibenkupplungen ausgeführt, die jeweils drei Reibscheiben 51 umfassen. Dadurch entstehen sechs Reibflächen je Teilkupplung 60, 70, so dass übliche Anpresskräfte reichen, um ein relativ hohes Drehmoment übertragen zu können. Dies wird trotz des relativ geringen Kupplungsdurchmessers, der aufgrund der Anordnung innerhalb des Elektromotors 40 gegeben ist, ermöglicht.

Neben dem bereits beschriebenen Vorteil des geringen Bauvolumens weist das Hybridmodul 1 den weiteren Vorteil auf, dass aufgrund der kompakten Anordnung der Kupplung Elemente, die zur Betätigung der Kupplungen notwendig sind, in Mehrfachfunktion mehreren Kupplungen zur Verfügung gestellt werden können. So können in der Stützwand 5 mehrere Versorgungsleitungen oder Versorgungs-und Steuerkabel auf dem Umfang versetzt angeordnet sein, so dass der axiale Bauraum auch bei mehreren Versorgungselementen nicht zunimmt.

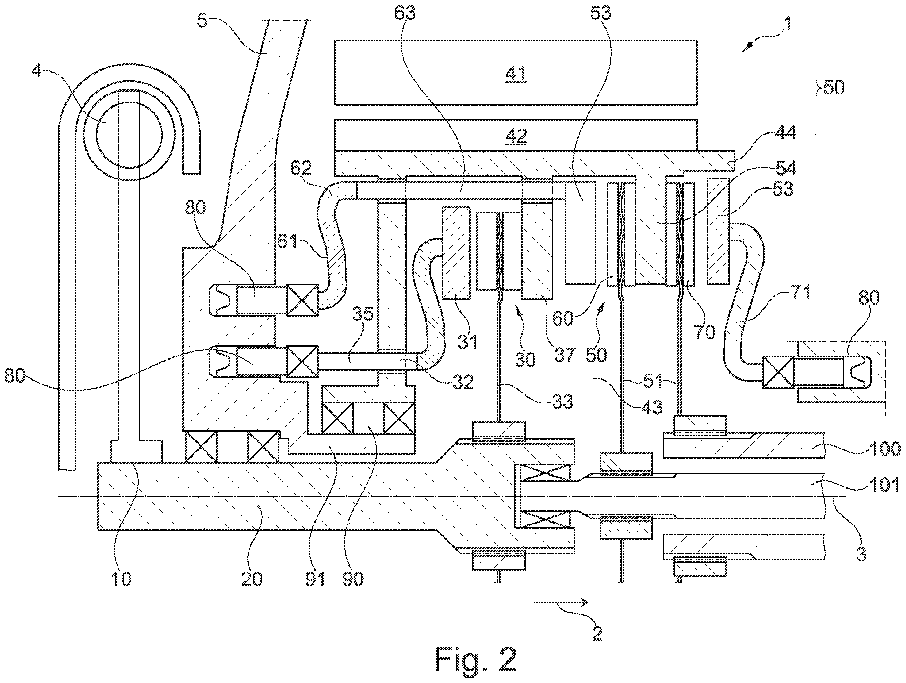

Figur 2 zeigt eine erfindungsgemäßes Hybridmodul, welches dem in Figur 1 dargestellten Hybridmodul weitgehend gleicht, mit dem Unterschied, dass in der in Figur 2 dargestellten Ausführungsform die Trennkupplung 30, die erste Teilkupplung 60, sowie auch die zweite Teilkupplung 70 im vom Rotor 42 des Elektromotors 40 umschlossenen Raum 43 angeordnet sind.

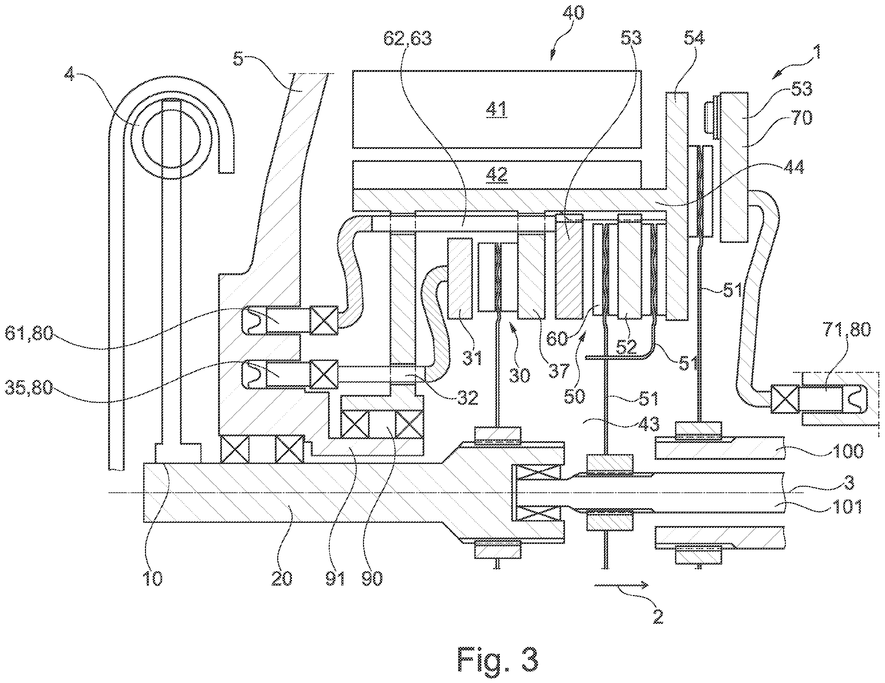

Auch Figur 3 zeigt eine der Figur 1 ähnliche Ausführungsform, die sich jedoch dahingehend von der in Figur 1 dargestellten Ausführungsform unterscheidet, dass hier lediglich die erste Teilkupplung 60 als Mehrscheibenkupplung ausgeführt ist und die zweite Teilkupplung 70 als eine radial größere Kupplung ausgeführt ist, die vollständig außerhalb des vom Elektromotor 40 umschlossenen Raumes 43 angeordnet ist. Dabei bildet der Rotorträger 44 die Gegenplatten der Kupplungen 30, 60, 70 aus, wobei er für die zweite Teilkupplung 70 einen Gegenplattenbereich realisiert, der radial deutlich weiter außen liegt als die Gegenplatten der Trennkupplung 30 sowie auch die Gegenplatte der ersten Teilkupplung 60. Da mit einer Mehrscheibenkupplung ein höheres Drehmoment übertragbar ist, als mit einer Einscheibenkupplung, ist aufgrund der Ausführung der ersten Teilkupplung 60 als Mehrscheibenkupplung sowie der zweiten Teilkupplung 70 mit relativ großem Durchmesser ist die sichere Übertragung eines hohen Drehmoments durch die Doppelkupplungsvorrichtung 50 gewährleistet.

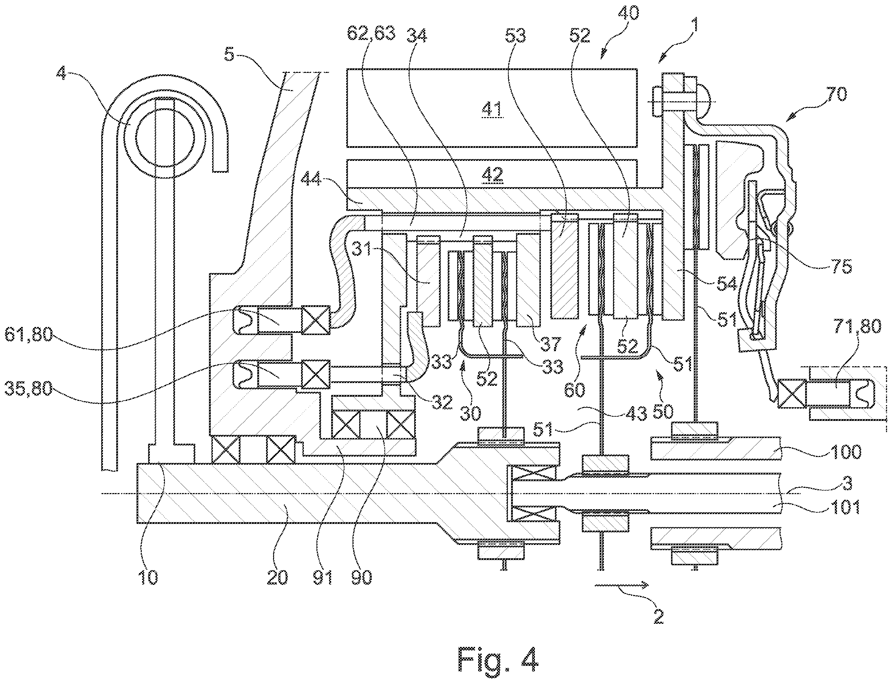

Das in Figur 4 gezeigte Ausführungsbeispiel des erfindungsgemäßen Hybridmodul 1 ist wiederum weitgehend übereinstimmend mit dem in Figur 3 dargestellten Hybridmodul 1 ausgestaltet, mit dem Unterschied, dass hier nicht nur die erste Teilkupplung 60 als Mehrscheibenkupplung ausgeführt ist, sondern auch die Trennkupplung 30. Des Weiteren ist in der hier dargestellten Ausführungsform die zweite Teilkupplung 70 mit einem Hebelmechanismus 75 ausgestattet. Die Trennkupplung 30 weist eine Translationsführung 34 auf, die eine axiale Führung einer Anpressplatte 31 sowie einer Zwischenplatte 52 realisiert. Dadurch werden die Anpressplatte 31 sowie auch die Zwischenplatte 52 gegen Mit-Rotieren, das heißt gegen ein Rotieren relativ zur Kupplung, gesichert. Die Besonderheit dieser Ausführungsform besteht insbesondere darin, dass hier entlang des Umfangs der Trennkupplung 30 Translationsführungen 34 sowie Überbrückungselemente 63 zur Betätigung der ersten Teilkupplung 60 alternierend angeordnet sind. Das bedeutet, dass in Abständen bzw. Lücken zwischen Überbrückungselementen 63 Translationsführungselemente 34 angeordnet sind, um somit trotz beengter Bauraumverhältnisse den sicheren Betrieb des Hybridmoduls auch bei höheren Drehmomenten zu gewährleisten.

Die Ausführung der zweiten Teilkupplung 70 mit einem Hebelmechanismus 75 bewirkt, dass in der zweiten Teilkupplung 70 höhere Anpresskräfte realisiert werden können, so dass auch das von der zweiten Teilkupplung 70 übertragbare Drehmoment gesteigert werden kann. Im Hebelmechanismus 75 verwendete Federn werden dabei als Hebelfedern oder Tellerfedern ausgeführt. Der Vorteil dieser Ausführungsform liegt insbesondere in der Übertragbarkeit hoher Drehmomente und der Verwendung etablierter, zuverlässiger sowie wirtschaftlicher Kupplungsdesigns.

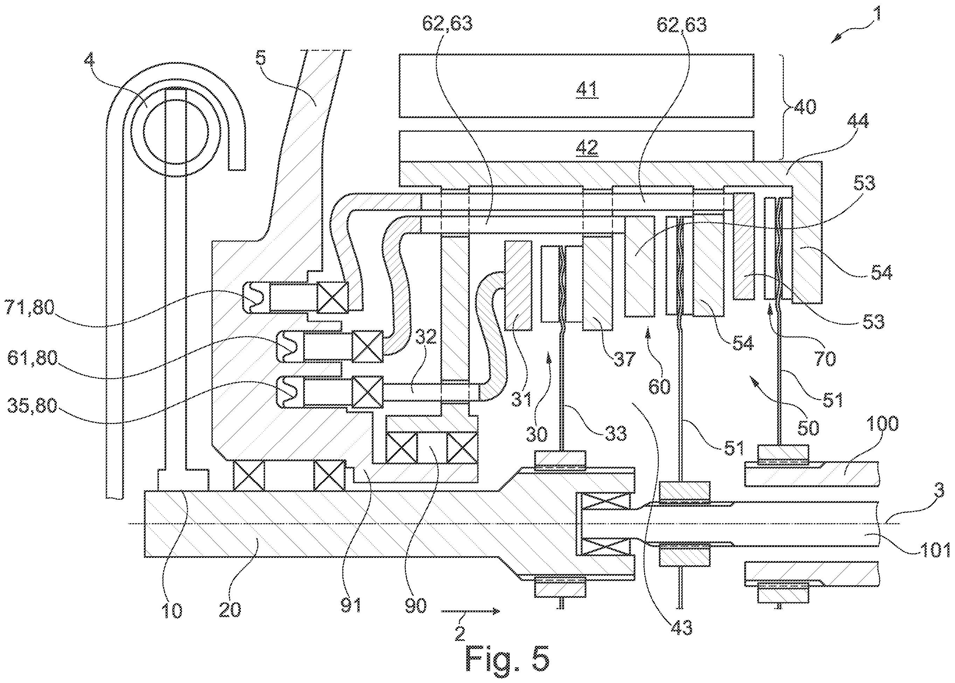

Das in Figur 5 dargestellte Ausführungsbeispiel eines erfindungsgemäßen Hybridmoduls weist die Besonderheit auf, dass das Trennkupplungsbetätigungssystem 35, das erste Betätigungssystem 61 sowie auch das zweite Betätigungssystem 71 auf der Seite des Elektromotors 40 angeordnet sind, die der Anschlusseinrichtung 10 zugewandt ist. Dies wird dadurch realisiert, dass sowohl das erste Betätigungssystem 61 sowie auch das zweite Betätigungssystem 71 jeweils einen Drucktopf 62 aufweisen, der Überbrückungselemente 63 umfasst, die sich radial außen an der Trennkupplung 63 diese überbrückend erstrecken. Dabei sind die dem zweiten Betätigungssystem 71 zugeordneten Überbrückungselemente 63 radial außerhalb der dem ersten Betätigungssystem 61 zugeordneten Überbrückungselemente 63 angeordnet. Die in Figur 5 dargestellte Ausführungsform kann jedoch auch dahingehend abgewandelt werden, dass die der ersten Teilkupplung 60 zugeordneten Überbrückungselemente alternierend mit der zweiten Teilkupplung 70 zugeordneten Überbrückungselementen in einer Umfangsfläche angeordnet sind. Dies hat den Vorteil, dass über der Trennkupplung 30 nicht Bauraum zur Verfügung gestellt werden muss, in dem radial nebeneinander Überbrückungselemente für die erste Teilkupplung 60 sowie für die zweite Teilkupplung 70 angeordnet werden.

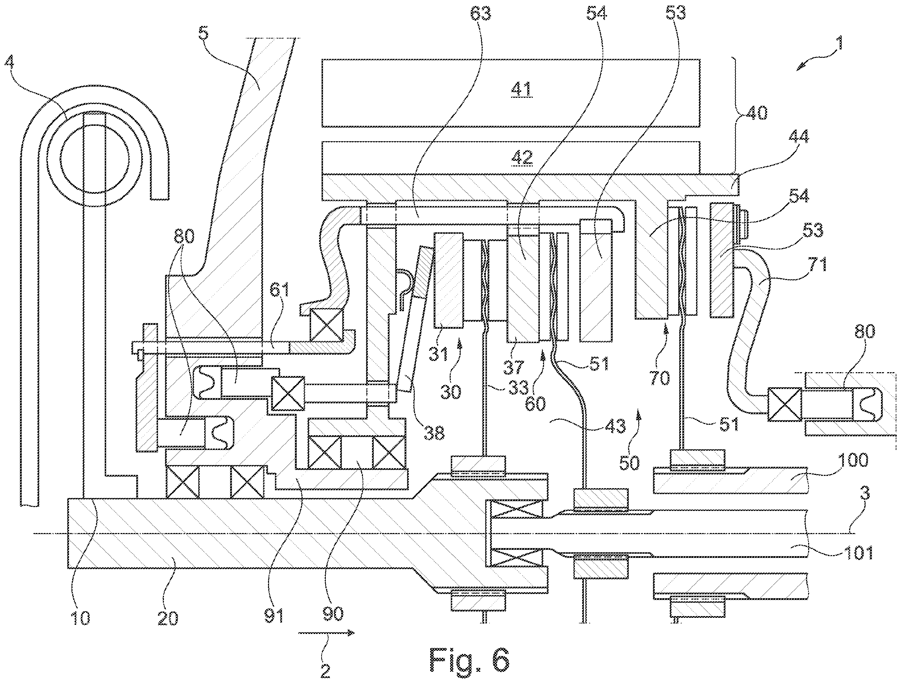

Die in Figur 6 dargestellte Ausführungsform des erfindungsgemäßen Hybridmoduls 1 ist wiederum ähnlich der in Figur 2 dargestellten Ausführungsform realisiert. Die Besonderheit der in Figur 6 dargestellten Ausführungsform liegt insbesondere darin, dass die Trennkupplung 30 als aufgedrückte Kupplung ausgeführt ist, so dass sich die Kraftübertragungseinrichtung 80 für die Trennkupplung 30 sowie die Anpressplatte 31 gegenläufig bewegen, wobei die Anpresskraft in der Trennkupplung 30 nicht von deren Kraftübertragungseinrichtung 80 aufgebracht wird, sondern von der hier angeordneten Tellerfeder 38.

Das erste Betätigungssystem 61 umfasst Überbrückungselemente 63, die hier als Zuganker ausgeführt sind. Demzufolge ist die der ersten Teilkupplung 60 zugeordnete Kraftübertragungseinrichtung 80 von der Doppelkupplungsvorrichtung 50 wegweisend angeordnet, um eine Zugkraft auf das Überbrückungselement 63 zur Betätigung der ersten Teilkupplung 60 zu bewirken.

Die in den Figuren 1 bis 6 dargestellten Ausführungsbeispiele sind dabei lediglich vereinfacht dargestellt. In der Praxis zu realisierende Hybridmodule können gegenüber den hier dargestellten Ausführungsbeispielen insbesondere im Bereich des Rotorträgers 44, des Rotors 42, des Elektromotors 40 und der Gegenplatten 37, 54 geteilt ausgeführt sein, um eine Montage des Hybridmoduls 1 zu ermöglichen.

## Patentansprüche

1. Hybridmodul (1) für ein Kraftfahrzeug zum Ankoppeln einer Verbrennungskraftmaschine, wobei das Hybridmodul aufweist:
eine Anschlusseinrichtung (10) zum mechanischen Ankoppeln einer Verbrennungskraftmaschine,
eine Trennkupplung (30), mit der ein Drehmoment von der Verbrennungskraftmaschine auf das Hybridmodul (1) übertragbar ist und mit der das Hybridmodul (1) von der Verbrennungskraftmaschine trennbar ist,
einen Elektromotor (40) zum Erzeugen eines Antriebsdrehmoments mit einem hohlzylinderförmigen Rotor (42), der innerhalb eines Stators (41) angeordnet ist, der an einer Stützwand (5) befestigt ist,
eine eine erste Teilkupplung (60) und eine zweite Teilkupplung (70) aufweisende Doppelkupplungsvorrichtung (50), mit der Drehmoment von dem Elektromotor (40) und/oder von der Trennkupplung (30) auf einen Antriebsstrang übertragbar ist,
ein Trennkupplungsbetätigungssystem (35) zum Betätigen der Trennkupplung (30),
ein erstes Betätigungssystem (61) zum Betätigen der ersten Teilkupplung (60), und
ein zweites Betätigungssystem (71) zum Betätigen der zweiten Teilkupplung (70), wobei
die Anschlusseinrichtung (10), die Trennkupplung (30) und die erste Teilkupplung (60) und/oder die zweite Teilkupplung (70) entlang einer Anordnungsrichtung (2) im Wesentlichen hintereinander angeordnet sind, und
die Trennkupplung (30) zumindest abschnittsweise innerhalb eines von dem Rotor (42) umschlossenen Raumes (43) angeordnet ist,
**dadurch gekennzeichnet, dass** das Trennkupplungsbetätigungssystem (35) und das erste Betätigungssystem (61) Kraftübertragungseinrichtungen (80) aufweisen, deren konzentrisch angeordnete Arbeits- bzw. Druckzylinder Gehäuse aufweisen, die mit der Stützwand (5) verbunden sind, und entlang der Anordnungsrichtung (2) auf der Seite des Elektromotors (40) angeordnet sind, die der Anschlusseinrichtung (2) zugewandt ist.

2. Hybridmodul nach Anspruch 1, **dadurch gekennzeichnet, dass** das zweite Betätigungssystem (71) entlang der Anordnungsrichtung (2) auf einer der Anschlusseinrichtung (10) zugewandten Seite des Elektromotors (40) angeordnet ist.

3. Hybridmodul nach einem der vorhergehenden Ansprüche, **dadurch gekennzeichnet, dass** die zweite Teilkupplung (70) eine größere radiale Erstreckung aufweist als die erste Teilkupplung (60) und auf einer der Anschlusseinrichtung (10) abgewandten Seite des Elektromotors (40) angeordnet ist.

4. Hybridmodul nach einem der vorhergehenden Ansprüche, **dadurch gekennzeichnet, dass** die die Kraftübertragungseinrichtungen (80) jeweils einen Druckzylinder und ein Betätigungslager (81) aufweisen, die zusammen jeweils eine Einheit bilden und die als Einheiten radial und/oder axial versetzt zueinander angeordnet sind.

5. Hybridmodul nach einem der vorhergehenden Ansprüche, **dadurch gekennzeichnet, dass** die Doppelkupplungsvorrichtung (50) eine Gegenplatte (54) aufweist, die für die erste Teilkupplung (60) und/oder für die zweite Teilkupplung (70) eine Gegenplattenfunktion erfüllt.

6. Hybridmodul nach Anspruch 5, **dadurch gekennzeichnet, dass**
die Gegenplatte mechanisch mit dem Rotor des Elektromotors verbunden ist, und
an der Gegenplatte ein Befestigungsabschnitt angeordnet ist, der derart gekröpft ausgeführt ist, dass er sich in einer radialen und axialen Richtung von der Gegenplatte weg erstreckt.

7. Hybridmodul nach einem der vorhergehenden Ansprüche, **dadurch gekennzeichnet, dass** das erste Betätigungssystem (61) wenigstens ein Überbrückungselement (63) aufweist, welches sich zum Betätigen der ersten Teilkupplung (60) an einer radial äußeren Seite der Trennkupplung (30) erstreckt.

8. Hybridmodul nach Anspruch 7, **dadurch gekennzeichnet, dass**
die Trennkupplung (30) eine Anpressplatte (31) und/oder Zwischenplatte (52) sowie eine Translationsführung (34) aufweist, die zum translatorischen Bewegen der Anpressplatte (31) und/oder Zwischenplatte (52) auf eine Gegenplatte (37) der Trennkupplung (30) ausgestaltet ist,
das erste Betätigungssystem (61) mehrere Überbrückungselemente (63) aufweist, und
die Translationsführung (34) in Umfangsrichtung zwischen Überbrückungselementen (63) angeordnet ist.

9. Hybridmodul nach einem der vorhergehenden Ansprüche, **dadurch gekennzeichnet, dass** wenigstens eines der Betätigungssysteme (35, 61, 71) der Teilkupplungen (60, 70) und/oder der Trennkupplung (30) einen Hebelmechanismus (75) zum Verstärken der Anpresskraft aufweist.

10. Antriebsanordnung für ein Kraftfahrzeug, wobei die Antriebsanordnung aufweist:
eine Verbrennungskraftmaschine,
ein Hybridmodul (1) nach einem der Ansprüche 1 bis 9, und
ein Getriebe, wobei
das Hybridmodul (1) über Kupplungen mechanisch mit dem Verbrennungsmotor und dem Getriebe verbunden ist.

## Claims

1. Hybrid module (1) for a motor vehicle for coupling an internal combustion engine, the hybrid module comprising:
a connection device (10) for mechanically coupling an internal combustion engine,
a decoupler (30) with which a torque can be transmitted from the internal combustion engine to the hybrid module (1) and with which the hybrid module (1) can be separated from the internal combustion engine,
an electric motor (40) for generating a drive torque with a hollow cylindrical rotor (42) which is arranged within a stator (41) which is fastened to a support wall (5),
a double clutch device (50) which has a first partial coupling (60) and a second partial coupling (70), and which can transmit torque from the electric motor (40) and/or from the decoupler (30) to a drive train,
a decoupler actuation system (35) for actuating the decoupler (30),
a first actuation system (61) for actuating the first partial coupling (60), and
a second actuation system (71) for actuating the second partial coupling (70), wherein
the connection device (10), the decoupler (30) and the first partial coupling (60) and/or the second partial coupling (70) are arranged substantially one behind the other along an arrangement direction (2), and
the decoupler (30) is arranged at least in sections within a space (43) enclosed by the rotor (42),
**characterised in that** the decoupler actuation system (35) and the first actuation system (61) have power transmission devices (80), the concentrically arranged working or pressure cylinders of which have housings which are connected to the support wall (5), and are arranged along the arrangement direction (2) on the side of the electric motor (40) which faces the connection device (2).

2. The hybrid module according to claim 1, **characterised in that** the second actuation system (71) is arranged along the arrangement direction (2) on a side of the electric motor (40) facing the connection device (10).

3. The hybrid module according to any one of the preceding claims, **characterised in that** the second partial coupling (70) has a greater radial extension than the first partial coupling (60) and is arranged on a side of the electric motor (40) facing away from the connection device (10).

4. The hybrid module according to any one of the preceding claims, **characterised in that** the power transmission devices (80) each have a pressure cylinder and an actuating bearing (81), which together form a unit and which are arranged as units radially and/or axially offset from one another.

5. The hybrid module according to any one of the preceding claims, **characterised in that** the double clutch device (50) has a counter plate (54) which fulfils a counter plate function for the first partial coupling (60) and/or for the second partial coupling (70).

6. The hybrid module according to claim 5, **characterised in that** t
he counter plate is mechanically connected to the rotor of the electric motor, and
a fastening section is arranged on the counter plate, and is cranked such that it extends in a radial and axial direction away from the counter plate.

7. The hybrid module according to one of the preceding claims, **characterised in that** the first actuation system (61) has at least one bridging element (63) which extends for actuating the first partial coupling (60) on a radially outer side of the decoupler (30).

8. The hybrid module according to claim 7, **characterised in that**
the decoupler (30) has a pressure plate (31) and/or intermediate plate (52) and a translational guide (34) which is configured for translatory movement of the pressure plate (31) and/or intermediate plate (52) onto a counter plate (37) of the decoupler (30),
the first actuation system (61) has a plurality of bridging elements (63), and
the translational guide (34) is arranged in the circumferential direction between bridging elements (63).

9. The hybrid module according to any one of the preceding claims, **characterised in that** at least one of the actuation systems (35, 61, 71) of the partial couplings (60, 70) and/or the decoupler (30) has a lever mechanism (75) for increasing the pressing force.

10. A drive arrangement for a motor vehicle, the drive arrangement comprising:
an internal combustion engine,
a hybrid module (1) according to any one of claims 1 to 9, and
a transmission, wherein
the hybrid module (1) is mechanically connected to the internal combustion engine and the transmission via couplings.

## Revendications

1. Module hybride (1) pour un véhicule automobile pour l'accouplement d'un moteur à combustion interne, le module hybride présentant :
un dispositif de raccordement (10) pour l'accouplement mécanique d'un moteur à combustion interne,
un embrayage de séparation (30) avec lequel un couple peut être transmis du moteur à combustion interne au module hybride (1) et avec lequel le module hybride (1) peut être séparé du moteur à combustion interne,
un moteur électrique (40) pour générer un couple d'entraînement avec un rotor (42) de forme cylindrique creuse qui est disposé à l'intérieur d'un stator (41) qui est fixé à une paroi de support (5),
un dispositif à double embrayage (50) présentant un premier embrayage partiel (60) et un second embrayage partiel (70), avec lequel le couple peut être transmis du moteur électrique (40) et/ou de l'embrayage de séparation (30) à une chaîne cinématique,
un système d'actionnement d'embrayage de séparation (35) pour l'actionnement de l'embrayage de séparation (30),
un premier système d'actionnement (61) pour l'actionnement du premier embrayage partiel (60) et
un second système d'actionnement (71) pour l'actionnement du second embrayage partiel (70),
le dispositif de raccordement (10), l'embrayage de séparation (30) et le premier embrayage partiel (60) et/ou le second embrayage partiel (70) étant agencés sensiblement les uns derrière les autres le long d'une direction d'agencement (2) et
l'embrayage de séparation (30) étant agencé au moins en partie à l'intérieur d'un espace (43) entouré par le rotor (42),
**caractérisé en ce que** le système d'actionnement d'embrayage de séparation (35) et le premier système d'actionnement (61) présentent des dispositifs de transmission de puissance (80), dont les vérins de travail ou de pression agencés concentriquement présentent des carters qui sont raccordés à la paroi de support (5) et disposés le long de la direction d'agencement (2) sur le côté du moteur électrique (40) qui est tourné vers le dispositif de raccordement (2).

2. Module hybride selon la revendication 1, **caractérisé en ce que** le second système d'actionnement (71) est disposé le long de la direction d'agencement (2) sur un côté du moteur électrique (40) tourné vers le dispositif de raccordement (10).

3. Module hybride selon l'une quelconque des revendications précédentes, **caractérisé en ce que** le second embrayage partiel (70) présente une extension radiale plus importante que le premier embrayage partiel (60) et est disposé sur un côté du moteur électrique (40) tourné à l'opposé du dispositif de raccordement (10).

4. Module hybride selon l'une quelconque des revendications précédentes, **caractérisé en ce que** les dispositifs de transmission de puissance (80) présentent chacun un vérin de pression et un palier d'actionnement (81) qui forment ensemble respectivement une unité et qui, en tant qu'unités, sont agencés de manière décalée l'un par rapport à l'autre dans le sens radial et/ou axial.

5. Module hybride selon l'une quelconque des revendications précédentes, **caractérisé en ce que** le dispositif à double embrayage (50) présente une contre-plaque (54) qui remplit une fonction de contre-plaque pour le premier embrayage partiel (60) et/ou pour le second embrayage partiel (70).

6. Module hybride selon la revendication 5, **caractérisé en ce que**
la contre-plaque est raccordée mécaniquement au rotor du moteur électrique et
une section de fixation est disposée sur la contre-plaque, laquelle section est conçue coudée de manière à s'étendre dans une direction radiale et axiale à l'opposé de la contre-plaque.

7. Module hybride selon l'une quelconque des revendications précédentes, **caractérisé en ce que** le premier système d'actionnement (61) présente au moins un élément de pontage (63) qui s'étend pour actionner le premier embrayage partiel (60) sur un côté radialement extérieur de l'embrayage de séparation (30).

8. Module hybride selon la revendication 7, **caractérisé en ce que**
l'embrayage de séparation (30) présente une plaque de pression (31) et/ou une plaque intermédiaire (52) ainsi qu'un guide de translation (34) qui est conçu pour le mouvement de translation de la plaque de pression (31) et/ou de la plaque intermédiaire (52), sur une contre-plaque (37) de l'embrayage de séparation (30),
le premier système d'actionnement (61) présente une pluralité d'éléments de pontage (63) et
le guide de translation (34) est agencé dans la direction circonférentielle entre les éléments de pontage (63).

9. Module hybride selon l'une quelconque des revendications précédentes, **caractérisé en ce qu'**au moins l'un des systèmes d'actionnement (35, 61, 71) des embrayages partiels (60, 70) et/ou de l'embrayage de séparation (30) présente un mécanisme à levier (75) pour augmenter la force de pression.

10. Système de propulsion pour un véhicule automobile, le système de propulsion présentant :
un moteur à combustion interne,
un module hybride (1) selon l'une quelconque des revendications 1 à 9 et
une transmission,
le module hybride (1) étant raccordé mécaniquement au moteur à combustion interne et à la transmission via des embrayages.
